# EUROPÄISCHE PATENTANMELDUNG

(11) **EP 4 141 293 A1**
(43) Veröffentlichungstag der Anmeldung: **01.03.2023**
(21) Anmeldenummer: 22191123.3
(22) Anmeldetag: 19.08.2022
(51) Int. Cl.: F16H 61/431, F16H 61/4148, F04B 49/06

(54) **VERFAHREN MIT EINEM HYDROSTATISCHEN ANTRIEB, HYDROMASCHINE ZUR DRUCKMITTELVERSORGUNG, UND HYDROSTATISCHER ANTRIEB DAMIT**

(30) Priorität: 26.08.2021 DE 102021209357
(71) Anmelder: Robert Bosch GmbH, 70442 Stuttgart (DE)
(72) Erfinder: Schmuttermair, Peter, 86459 Gessertshausen (DE); Tetik, Salih, 89278 Nersingen (DE)

(57) **Zusammenfassung**

Offenbart ist ein Verfahren mit einem Antrieb mit einer Hydromaschine mit verstellbarem Fördervolumen und wenigstens einem darüber in offenem hydraulischen Kreis mit Druckmittel versorgbaren hydrostatischen Arbeitsverbraucher, wobei die Hydromaschine einen hydraulischen Verstellmechanismus hat, der zum Verstellen eines Fördervolumens der Hydromaschine elektrisch proportional ansteuerbar ist, wobei eine elektronische Steuerung vorgesehen ist, über die ein Ausgangsdruck der Hydromaschine in Abhängigkeit eines Lastdrucks des wenigstens einen Arbeitsverbrauchers oder eines höchsten oder priorisierten Lastdrucks der mehreren Arbeitsverbraucher und einer vorbestimmten Druckdifferenz steuer- oder regelbar ist, mit Schritten Erfassen des Lastdrucks oder der Lastdrücke, Erhöhen des Lastdrucks oder des höchsten oder priorisierten der Lastdrücke um die vorbestimmte Druckdifferenz auf einen Soll-Ausgangsdruck und Ansteuern des Pilotventils mit einem vom Soll-Ausgangsdruck abhängigen Ansteuersignal.

Offenbart sind zudem ein mit dem Verfahren verwendbarer Antrieb und eine Hydromaschine für den Antrieb.

## Beschreibung

Die Erfindung betrifft ein Verfahren mit einem hydrostatischen Antrieb gemäß dem Oberbegriff des Patentanspruchs 1, eine Hydromaschine gemäß Patentanspruch 5, sowie einen hydrostatischen Antrieb gemäß Patentanspruch 12.

Eine gattungsgemäße, als Hydropumpe betreibbare, Hydromaschine dient der Druckmittelversorgung einer Arbeitshydraulik, wie beispielsweise eines Hydrozylinders oder Hydromotors eines Hebezeugs, beispielsweise eine Hubwerks oder einer Winde. Die Arbeitshydraulik ist insbesondere Bestandteil einer mobilen Arbeitsmaschine und kann einen oder mehrere Arbeitsverbraucher umfassen, denen ein Druckmittelvolumenstrom jeweils über ein Steuerventil zugemessen werden kann. Um sowohl rotatorische als auch lineare Verbraucher und insbesondere solche mit einem Differenzvolumen ohne Hydrospeicher versorgen zu können, ist die Hydromaschine mit dem oder den Verbrauchern im offenen hydraulischen Kreislauf fluidisch verbunden.

Bei herkömmlichen Antrieben, die als Konstantdrucksystem konzipiert sind, muss die Hydromaschine als Ausgangsdruck stets einen maximalen Nenndruck bereitstellen, welcher dann über die jeweilige Zumessblende auf den individuellen Lastdruck gedrosselt wird. Dies stellt einen erheblichen Energieverlust bei submaximalen Lastdrücken dar.

Die Energieeffizienz lässt sich demgegenüber verbessern, wenn die Hydromaschine lastorientiert angesteuert wird (Load sensing). Hierzu wird aus den Lastdrücken der Arbeitsverbaucher der höchste ausgewählt, was hydraulisch beispielsweise über eine Wechselventilkaskade oder elektronisch über eine Steuerung aus zuvor elektrifizierten Lastdruck-Signalen erfolgt. Dem so ermittelten, höchsten oder anderweitig priorisierten Lastdruck wird eine vorbestimmte Druckdifferenz aufgeschlagen und die Summe geht als Soll-Ausgangsdruck in die Ansteuerung der Hydromaschine ein. Die Stellgröße der Hydromaschine zum Erreichen des geforderten Ausgangsdrucks ist das verstellbare Fördervolumen der Hydromaschine, wobei ein Regelkreis zur Regelung des Ausgangsdrucks überlagert sein kann.

Nachteilig an derartigen Lösungen ist, dass die Druckdifferenz fest und zur Deckung der Nennleistung der Hydromaschine eingestellt ist. Bei unterschwelliger Leistung muss dann eine höhere Druckdifferenz aufgebaut werden, als sie zur Kompensation von Druckverlusten nötig wäre. Dies führt zu einer geringen Energieeffizienz der Druckmittelversorgung.

Dem gegenüber liegt der Erfindung die Aufgabe zu Grunde, ein Verfahren mit einem hydrostatischen Antrieb zu schaffen, mit dem dieser mit höherer Energieeffizienz betreibbar ist. Weitere Aufgaben bestehen darin, einen energieeffizienter betreibbaren Antrieb und eine energieeffizienter betreibbare Hydromaschine zu schaffen.

Die erste Aufgabe wird gelöst durch ein Verfahren mit den Merkmalen des Patentanspruchs 1. Die anderen Aufgaben werden jeweils gelöst durch eine Hydromaschine mit den Merkmalen des Patentanspruchs 5 und durch einen Antrieb mit den Merkmalen des Patentanspruchs 12.

Vorteilhafte Weiterbildungen der Erfindungen sind in den jeweils abhängigen Patentansprüchen beschrieben.

Eine Hydromaschine, in Folge Hydropumpe, ist zur Druckmittelversorgung wenigstens eines hydrostatischen Arbeitsverbrauchers, insbesondere einer mobilen Arbeitsmaschine, in offenem hydraulischen Kreis vorgesehen. Die Hydropumpe ist vorzugsweise als Axialkolbenmaschine in Schrägscheiben- oder Schrägachsenbauweise mit verstellbarem Verdrängungsvolumen - im Folgenden Fördervolumen - ausgestaltet. Hierfür hat sie einen Verstellmechanismus mit einem hydraulischen Stellzylinder mit einem Stellkolben. Über ein elektrisch proportional ansteuerbares Pilotventil ist dabei zur Verstellung ein Druckmittel-Zufluss und/oder ein Druckmittel-Abfluss in einem vom Stellkolben begrenzten Steuerraum des Stellzylinders steuerbar. Vorzugsweise ist vom Stellkolben ein Bauelement der Hydropumpe angelenkt, wie beispielsweise eine Schrägscheibe oder eine Schrägachse, von dessen Stellung oder Position das Fördervolumen abhängt. Die Hydropumpe ist elektronisch und lastorientiert steuerbar. Hierzu ist eine elektronische Steuerung vorgesehen, die eingerichtet ist, dass über sie ein erfassbarer Lastdruck des wenigstes einen Arbeitsverbrauchers oder ein erfass- und ermittelbarer höchster oder priorisierter Lastdruck mehrerer Arbeitsverbraucher um eine vorbestimmte Druckdifferenz - im Folgenden als Pumpen-Delta-p bezeichnet - zu einem Soll-Ausgangsdruck der Hydropumpe summierbar ist. Sofern keine weitere Differenzierung nötig ist, werden in Folge der Lastdruck des wenigstes einen Arbeitsverbrauchers und der höchste oder der priorisierte Lastdruck mehrerer Verbraucher als gemeldeter Lastdruck bezeichnet. Unabhängig davon, ob der oder die Verbraucher mit herkömmlicher Drosselsteuerung oder mit einer Load-Sensing-Steuerung (LS, LUDV) mit Druckmittel versorgt werden, ist diese Erhöhung des gemeldeten Lastdrucks um das Pumpen-Delta-p notwendig, um einen aus dem zugemessenen Druckmittelvolumenstrom resultierenden Strömungsdruckverlust kompensieren zu können. In Abhängigkeit des so ermittelten Soll-Ausgangsdrucks ist über die Steuerung ein elektrisches Ansteuersignal für das genannte Pilotventil ermittelbar, mit dem dessen Ansteuerung erfolgt, woraus die Verstellung des Fördervolumens resultiert. Erfindungsgemäß ist die Druckdifferenz in der Steuerung in Abhängigkeit des Druckmittelvolumenstroms der Hydropumpe vorbestimmt eingerichtet. Dies kann funktional als Kennlinie, Kennfeld oder dergleichen umgesetzt sein.

Da der genannte Druckverlust vom Druckmittelvolumenstrom abhängt, kann so je nach Druckmittelvolumenstrom ein anderes Pumpen-Delta-p ausgewählt und in das genannte Ansteuersignal mit dem Ziel der Verstellung gewandelt werden. In anderen Worten kann bei gegebenem gemeldetem Lastdruck und kleinerem Druckmittelvolumenstrom ein kleineres Pumpen-Delta-p und damit ein geringerer Soll-Ausgangsdruck gewählt werden, als bei höherem Druckmittelvolumenstrom. So kann ein unnötig hoher Soll-Ausgangsdruck vermieden werden, sodass die Energieeffizienz der Hydropumpe gegenüber einer herkömmlichen Ausführung mit vorbestimmt konstant eingerichtetem Pumpen-Delta-p erhöht ist.

Da der Druckverlust bei gegebenem Druckmittelvolumenstrom zudem von der Viskosität des Druckmittels und diese wiederum von der Temperatur abhängig ist, ist in einer Weiterbildung das Pumpen-Delta-p in der Steuerung in Abhängigkeit der Temperatur des Druckmittels, der Hydropumpe, des Kreises und/oder des wenigstens einen Arbeitsverbrauchers eingerichtet. So kann das Pumpen-Delta-p noch differenzierter ermittelt werden, wodurch die Energieeffizienz weiter erhöht ist.

Der Ausgangsdruck kann noch besser gemäß dem Soll-Ausgangsdruck geführt werden, wenn die elektronische Steuerung in einer Weiterbildung mit einer ersten Regeleinrichtung eingerichtet ist, die als Eingangsgrößen den Soll-Ausgangsdruck und einen erfassbaren Ist-Ausgangsdruck aufweist. Hierzu bietet sich eine stabile PID-Regeleinrichtung an. Vorzugsweise hat die Hydropumpe in einer Weiterbildung eine Druckerfassungseinheit zur Erfassung des Ist-Ausgangsdrucks.

Ergänzend kann die Steuerung mit einer, insbesondere optional aktivierbaren, zweiten Regeleinrichtung eingerichtet sein, über die das Verdrängungsvolumen der Hydromaschine regelbar ist, insbesondere wenn diese nicht im Druckregelbetrieb ist, was beispielsweise im Rekuperations- oder Motorbetrieb der Fall sein kann, wenn Druckmittel vom Arbeitsverbraucher zur Hydromaschine strömt. Eingangsgrößen der zweiten Regeleinrichtung sind dann zumindest ein Soll-Verdrängungsvolumen und ein erfassbares Ist-Verdrängungsvolumen.

In einer Weiterbildung hat die Hydropumpe eine Weg- oder Winkel-Erfassungseinheit zur Erfassung eines das Verdrängungs- oder Fördervolumen bestimmenden Weges oder Winkels. Hier bietet sich beispielsweise die Erfassung eines Stellweges des Stellkolbens oder eines Schwenkwinkels einer Schrägscheibe oder Schrägachse der Hydropumpe an. In der Steuerung ist zur Ermittlung des Fördervolumens aus dem Weg oder Winkel vorzugsweise eine Verstell-Kinematik der Hydropumpe abgelegt.

Ergänzend weist die Hydropumpe in einer Weiterbildung eine Drehzahl-Erfassungseinheit oder Drehwinkelgeschwindigkeits-Erfassungseinheit zur Erfassung ihrer Drehzahl oder Drehwinkelgeschwindigkeit auf. Alternativ oder ergänzend dazu weist die Steuerung die Drehzahl oder Drehwinkelgeschwindigkeit als von einer nebengeordneten Steuerung bereitgestellte Eingangsgröße auf. Die nebengeordnete Steuerung kann beispielsweise das Steuergerät einer Antriebsmaschine, von der die Hydropumpe antreibbar ist, sein.

In einer bevorzugten Weiterbildung ist die Steuerung eingerichtet, den Druckmittelvolumenstrom aus der erfassten oder bereitgestellten Drehzahl oder Drehwinkelgeschwindigkeit und aus dem erfassten Weg oder Winkel zu ermitteln, um hieraus - wie bereits eingangs erwähnt - das Pumpen-Delta-p zu ermitteln.

Um das Pumpen-Delta-p noch besser in Abhängigkeit auftretender Verluste auswählen zu können und die Energieeffizienz der Hydropumpe weiter zu steigern, ist das Pumpen-Delta-p in einer Weiterbildung in der Steuerung in Abhängigkeit eines Leckagemodells des hydraulischen Kreises eingerichtet.

Ein hydrostatischer Antrieb hat erfindungsgemäß eine Hydromaschine, die gemäß wenigstens einem Aspekt der vorangegangenen Beschreibung ausgestaltet ist. Diese ist in offenem hydraulischen Kreis mit wenigstens einem hydraulischen Arbeitsverbraucher fluidisch verbindbar oder verbunden. Der Arbeitsverbraucher kann linear oder rotatorisch wirksam sein und ist insbesondere Bestandteil einer Arbeitshydraulik einer mobilen Arbeitsmaschine.

In einer bevorzugten Weiterbildung ist der wenigstens eine Arbeitsverbraucher oder ist wenigstens einer der mehreren Arbeitsverbraucher mit der Hydromaschine über eine gemäß einer Arbeitsanforderung betätigbare Zumessblende fluidisch verbindbar oder verbunden. Dieser ist eine Individualdruckwaage zugeordnet, über die ein Druckverlust über die Zumessblende regelbar ist. Auf diese Weise ist von der Zumessblende mit der Individualdruckwaage eine LS-Steueranordnung oder eine LUDV-Steueranordnung ausgebildet, über die einer Bedienperson eine lastunabhängige Bewegungssteuerung der von dem oder den Arbeitsverbrauchern zu bewegenden Last ermöglicht ist. Von einer weitergehenden Beschreibung der LS- oder LUDV-Steuerung sei an dieser Stelle abgesehen, da diese hinreichend aus dem Stand der Technik bekannt sind.

In einer bevorzugten Weiterbildung des Antriebes weist dieser neben der genannten Arbeitshydraulik mit wenigstens einem Arbeitsverbraucher eine Fahrhydraulik mit wenigstens einem hydrostatischen Fahrverbraucher auf, der im offenen hydraulischen Kreis und fluidisch parallel zum wenigstens einen Arbeitsverbraucher mit der Hydropumpe verbunden oder verbindbar ist. Sowohl die Arbeitshydraulik als auch die Fahrhydraulik werden dann von nur einer Hydropumpe mit Druckmittel versorgt, was den vorrichtungstechnischen Aufwand zur Druckmittelversorgung geringhält.

In einer Weiterbildung weist die Steuerung vorzugsweise eine Priorisierungs- oder Maximalauswahl-Einrichtung auf, in die der Soll-Ausgangsdruck (ermittelt aus dem gemeldeten Lastdruck und dem druckmittelvolumenstromabhängigen Pumpen-Delta-p) und ein aus einer Fahr-Anforderung hervorgehender Soll-Druck eingehen. Über die Priorisierungs- oder Maximalauswahl-Einrichtung ist der höhere der beiden als ausgewählter Soll-Ausgangsdruck ermittelbar, in Abhängigkeit von dem das genannte Ansteuersignal ermittelt wird.

Ein Verfahren ist mit einem Antrieb vorgesehen, der eine als Hydropumpe betreibbare Hydromaschine mit verstellbarem Fördervolumen und wenigstens einen über diese in offenem hydraulischen Kreis mit Druckmittel versorgbaren hydrostatischen Arbeitsverbraucher aufweist. Die Hydromaschine, im Folgenden Hydropumpe, hat einen Verstellmechanismus mit einem Stellzylinder mit einem Stellkolben zum Verstellen ihres Fördervolumens, sowie ein elektrisch proportional ansteuerbares Pilotventil, über das ein Druckmittel-Zufluss und/oder ein Druckmittel-Abfluss in einem vom Stellkolben begrenzten Steuerraum des Stellzylinders steuerbar ist. Zudem hat sie eine elektronische Steuerung. Das Verfahren hat zumindest einen Schritt "Erfassen des Lastdrucks des wenigstens einen Arbeitsverbrauchers, oder der Lastdrücke der mehreren Arbeitsverbaucher", der über eine Druckerfassungseinheit erfolgt, einen Schritt "Erhöhen des Lastdrucks des wenigstens einen Arbeitsverbrauchers oder eines höchsten oder priorisierten der Lastdrücke um eine vorbestimmte Druckdifferenz, im Folgenden als Pumpen-Delta-p bezeichnet, auf einen Soll-Ausgangsdruck der Hydromaschine", der über die elektronische Steuerung erfolgt, und einen Schritt "Ansteuern des Pilotventils mit einem vom Soll-Ausgangsdruck abhängigen Ansteuersignal", der ebenso über die elektronische Steuerung erfolgt. Erfindungsgemäß erfolgt über die elektronische Steuerung die Ermittlung des Pumpen-Delta-p in Abhängigkeit eines erfassten oder ermittelten Druckmittelvolumenstroms der Hydromaschine. Das Pumpen-Delta-p geht somit in die Ermittlung des Soll-Ausgangsdrucks nicht vorbestimmt konstant, sondern variabel in Abhängigkeit des den Druckverlust bestimmenden Druckmittelvolumenstroms. So kann situativ ein jeweils hinreichendes Pumpen-Delta-p bereitgestellt werden, was die Energieeffizienz erhöht.

Da der Druckverlust zudem von der Viskosität des Druckmittels und diese wiederum von der Temperatur abhängig ist, erfolgt über die Steuereinheit die Ermittlung des Pumpen-Delta-p in einer Weiterbildung zudem in Abhängigkeit der Temperatur des Druckmittels, der Hydropumpe, des Kreises und/oder des wenigstens einen Arbeitsverbrauchers.

Der Druckmittelvolumenstrom kann in einer Weiterbildung über die Steuerung, basierend auf erfassten oder bereitgestellten Werten der Drehzahl oder Drehwinkelgeschwindigkeit und des Stellweges des Stellkolbens oder des Schwenkwinkels der Schrägachse oder -scheibe, ermittelt werden.

Im Falle mehrerer Arbeitsverbaucher kann die Ermittlung des höchsten der Lastdrücke oder beispielsweise eine Priorisierung eines Lastdrucks - wie beispielsweise einer hydraulischen Lenkung - entweder hydraulische Mittel, beispielsweise eine Wechselventilkaskade, oder über die elektronische Steuerung erfolgen, die hierfür vorzugsweise eine hydraulische Auswahleinrichtung aufweist. Eine Mischform derartiger Mittel ist möglich.

Im Folgenden wird je ein Ausführungsbeispiel eines erfindungsgemäßen Antriebs und eines erfindungsgemäßen Verfahrens näher erläutert. Es zeigen:
Figur 1 einen Antrieb, gemäß einem Ausführungsbeispiel, und
Figur 2 ein Verfahren mit dem Antrieb, gemäß einem Ausführungsbeispiel.

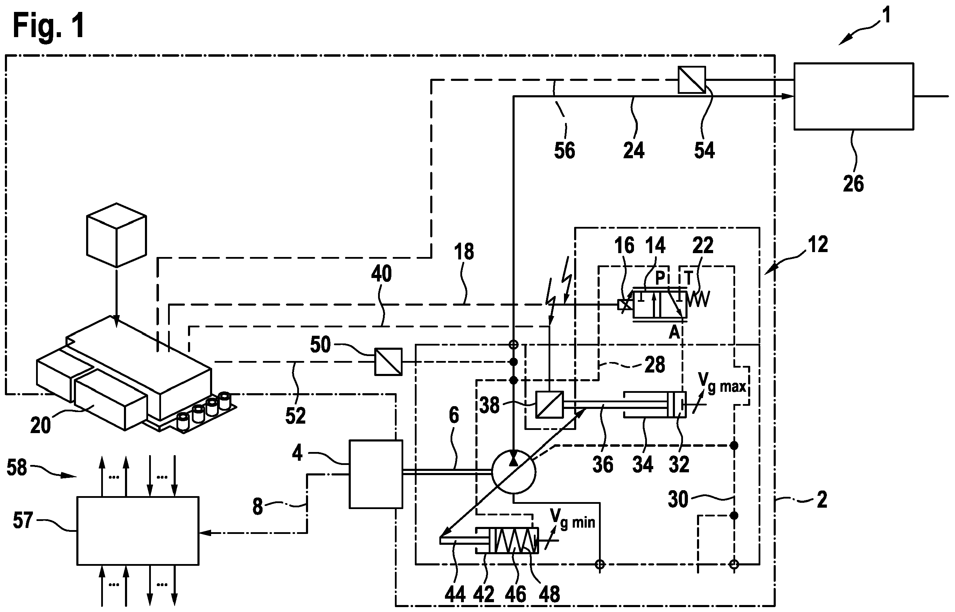

Gemäß Fig. 1 ist ein hydrostatischer Antrieb 1 mit einer Hydromaschine 2 gezeigt, die als Axialkolbenmaschine ausgestaltet ist. Diese hat eine Schwenkwiege zum Verstellen ihres Fördervolumens und ist sowohl als Pumpe als auch als Motor betreibbar. Im Folgenden wird sie im Sinne ihrer Aufgabe der Druckmittelversorgung von hydrostatischen Arbeitsverbrauchern als Hydropumpe oder Axialkolbenpumpe 2 bezeichnet. Angetrieben wird die Axialkolbenpumpe 2 über eine Antriebseinheit 4, bei der es sich beispielsweise um einen Verbrennungsmotor, wie beispielsweise ein Dieselaggregat, oder um einen Elektromotor handeln kann. Über eine Triebwelle 6 ist die Axialkolbenpumpe 2 mit der Antriebseinheit 4 verbunden. Eine Drehzahl 8 der Triebwelle 6 kann über nicht dargestellte Mittel, beispielsweise über einen Drehzahlsensor, abgegriffen werden und einer Steuerung 20 des Antriebes 1 oder der Axialkolbenpumpe 2 bereitgestellt oder zugeführt werden. Im dargestellten Ausführungsbeispiel erfolgt die Bereitstellung der Drehzahl 8 mittelbar über einen CAN-Bus 58 und das nebengeordnete Steuergerät 57 der Antriebseinheit 4. Alternativ kann die Zuführung aber auch direkt erfolgen.

Für Axialkolbenpumpe 2 ist gemäß Figur 1 ein Verstellmechanismus 12 vorgesehen. Dieser hat ein Pilotventil 14, dessen Ventilschieber elektrisch proportional über einen Aktor 16 ansteuerbar. Hierfür wird dem Aktor 16 ein Ansteuersignal 18 von der Steuerung 20 zugeführt. Der Ventilschieber des Pilotventils 14 in Richtung einer Grundstellung mit einer Federkraft einer Ventilfeder 22 beaufschlagt. Die Federkraft wirkt dabei entgegen der Aktorkraft des Aktors 16.

Die Axialkolbenmaschine 2 ist ausgangsseitig mit einer Druckleitung 24 verbunden, die wiederum mit LUDV-Ventilsteuerblock 26 verbunden ist. Über diesen kann die Druckmittelversorgung zwischen der Axialkolbenpumpe 2 und einem oder mehreren hydrostatischen Arbeitsverbrauchern (nicht dargestellt) des Antriebes 1 gesteuert werden. Von der Druckleitung 24 zweigt eine Steuerleitung 28 ab, die an einen Druckanschluss P des Pilotventils 14 angeschlossen ist. Die Steuerleitung 28 ist beispielsweise in einem Gehäuse der Axialkolbenpumpe 2 ausgebildet. Des Weiteren weist das Pilotventil 14 einen Tankanschluss T auf, der über eine Tankleitung 30 mit einem Tank verbunden ist. Außerdem hat das Pilotventil 14 einen Arbeitsanschluss A, der mit einem Steuerraum 32 eines Stellzylinders 34 verbunden ist. Der Steuerraum 32 wird dabei von einem Stellkolben 36 des Stellzylinders begrenzt. Über den Stellkolben 36 kann dann eine Schrägscheibe der Axialkolbenpumpe 2 verstellt werden. Ein Stellweg des Stellkolbens 36 wird über einen Wegsensor 38 erfasst. Ergänzend oder alternativ kann ein Schwenkwinkel 40 der Schwenkwiege der Axialkolbenpumpe 2 über einen rotatorischen, magnetischen Sensor von einer Schwenkachse der Schwenkwiege abgegriffen werden. Über den erfassten Stellweg oder den erfassten Winkel 40 kann über die Steuerung 20 das Ist-Fördervolumen oder das Ist-Verdrängungsvolumen der Axialkolbenpumpe 2 ermittelt werden. In der Grundstellung des Ventilschiebers des Pilotventils 14 ist der Druckanschluss P mit dem Arbeitsanschluss A verbunden und der Tankanschluss T abgesperrt. Bei Beaufschlagung des Ventilschiebers mit der Aktorkraft des Aktors 16 wird der Ventilschiebers ausgehend von seiner Grundstellung in Richtung von Schaltstellungen bewegt, bei denen der Druckanschluss P gesperrt und der Arbeitsanschluss A mit dem Tankanschluss T verbunden ist. Somit wird in der Grundstellung des Ventilschiebers des Pilotventils 14 der Stellkolben 36 mit Druckmittel aus der Druckleitung 24 beaufschlagt. Des Weiteren ist bei dem Verstellmechanismus 12 ein Gegenzylinder 42 vorgesehen. Dieser hat einen Stellkolben 44, der an der Schrägscheibe der Axialkolbenmaschine 2 angreift. Der Stellkolben 44 begrenzt einen Steuerraum 46, der mit der Druckleitung 24 verbunden ist. Über Druckmittel des Steuerraums 46 und über die Federkraft einer Feder 48 wird der Stellkolben 44 derart beaufschlagt, dass dieser die Schrägscheibe in Richtung einer Vergrößerung des Fördervolumens belastet.

Des Weiteren ist ein Drucksensor 50 vorgesehen, über den der Druck in der Druckleitung 24 abgegriffen und der Steuerung 20 gemeldet wird, wobei es sich bei dem Druck um einen Ist-Ausgangsdruck 52 handelt. Außerdem ist ein Drucksensor 54 vorgesehen, der den zuvor über eine Wechselventilkaskade ermittelten, höchsten Ist-Lastdruck (Ist-LS-Druck) 56 erfasst und der Steuerung 20 übermittelt.

Im Einsatz des Antriebes 1 wird über das Pilotventil 14 und den Stellkolben 36 die Position der Schrägscheibe der Axialkolbenpumpe 2 gesteuert. Ein geförderter Druckmittelvolumenstrom der Axialkolbenmaschine 2 ist proportional zur Stellung der Schrägscheibe und kann über die Steuerung 20 aus dem Produkt des zuvor ermittelten Fördervolumens und der erfassten Drehzahl ermittelt werden. Der durch die Feder 48 vorgespannte Gegenkolben 44 wird ständig mit dem Ist-Ausgangsdruck oder Pumpendruck beaufschlagt. Bei nichtdrehender Axialkolbenmaschine 2 und drucklosem Verstellmechanismus 12 wird die Schrägscheibe durch die Feder 48 in einer Position +100 Prozent gehalten. Bei angetriebener Axialkolbenmaschine 2 und stromlosem Aktor 16 des Pilotventils 14 schwenkt die Schrägscheibe auf einen Nullhubdruck, da der Stellkolben 36 mit Druckmittel der Druckleitung 24 beaufschlagt ist. Ein Gleichgewicht zwischen einem Ist-Ausgangsdruck am Stellkolben 36 und der Federkraft der Feder 48 und der Kraft am Gegenkolben 44 stellt sich bei einem vorbestimmten Druck oder Druckbereich ein, beispielsweise zwischen 8 bis 12 bar. Dieser Nullhubbetrieb wird beispielsweise bei einer spannungslosen Elektronik oder Steuerung 20 eingenommen. Die Ansteuerung des Pilotventils 14 erfolgt über die Steuerung 20, bei der es sich beispielsweise um vorzugsweise eine digitale Elektronik, alternativ um eine analoge Elektronik, handelt.

Die Steuerung 20 verarbeitet den gemeldeten höchsten Lastdruck 56 der Arbeitsverbraucher mit einer in der Steuerung abgelegten, vorbestimmten Druckdifferenz - dem sogenannten Pumpen-Delta-p - zu einem Soll-Ausgangsdruck in Abhängigkeit von dem wiederum der Aktor 16 mit dem zuvor genannten Ansteuersignal angesteuert wird.

Hierzu weist die Steuerung eine Regeleinrichtung auf, deren Eingangsgrößen der Ist-Ausgangsdruck 52, der Soll-Ausgangsdruck, der gemeldete höchste Lastdruck 56 und die vorbestimmte Druckdifferenz sind. Letztgenannte ist erfindungsgemäß in Abhängigkeit des fortwährend ermittelten Druckmittelvolumenstroms der Axialkolbenpumpe 2 in der Steuerung 20 eingerichtet.

Die Regeleinrichtung ist im Ausführungsbeispiel dergestalt, dass zunächst der gemeldete Lastdruck 56 und die Soll-Druckdifferenz über ein Summierglied der Regeleinrichtung zu einem Soll-Ausgangsdruck verknüpft werden. Dieser geht zusammen mit dem Ist-Ausgangsdruck in ein Regelglied, beispielsweise ein PID-Glied der Regeleinrichtung der Steuerung 20 ein. Als Ausgangsgröße des Regelglieds und damit der Regeleinrichtung der Steuerung 20 ergibt sich dann mittelbar das zuvor genannte Ansteuersignal des Aktors 16 des Pilotventils 14.

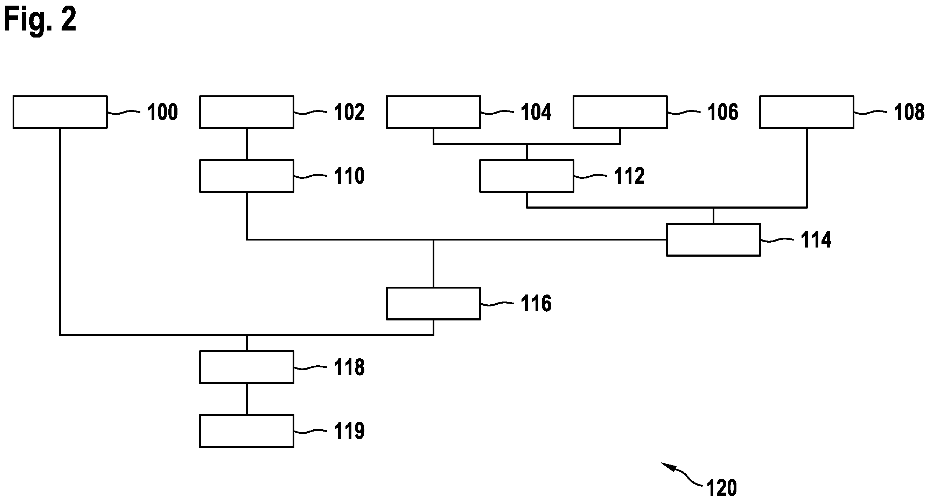

Figur 2 zeigt den Ablauf eines erfindungsgemäßen Verfahrens 120, das zur Ausführung in der Steuerung 20 abgelegt ist. Fortwährend erfolgen im Betrieb des Antriebes 1 die Schritte Erfassen 100 des Ist-Ausgangsdrucks der Axialkolbenpumpe 2, Erfassen 102 der Lastdrücke der Arbeitsverbraucher, Erfassen 104 der Drehzahl der Axialkolbenpumpe 2, Erfassen 106 des Stellweges des Stellkolbens 36 oder des Schwenkwinkels der Schrägscheibe und Erfassen 108 der Temperatur des Druckmittels über die entsprechenden, zuvor genannten Erfassungseinheiten.

Die Auswahl oder Ermittlung 110 des höchsten der Lastdrücke erfolgt im gezeigten Ausführungsbeispiel innerhalb des LUDV-Steuerblocks 26 mit dem hydraulischen Mittel einer Wechselventilkaskade. Der höchste der Lastdrücke wird vom Drucksensor 56 erfasst und an die Steuerung 20 übermittelt.

Der erfasste Stellweg oder der Schwenkwinkel und die erfasste Drehzahl werden an die Steuerung 20 übermittelt, die daraus und mittels der in ihr abgelegten Verstellkinematik in einem Schritt 112 den Druckmittelvolumenstrom der Axialkolbenpumpe 2 ermittelt.

Die erfasste Temperatur und der ermittelte Druckmittelvolumenstrom gehen dann in der Steuerung 20 in die Ermittlung 114 der Druckdifferenz ein, um die der Soll-Ausgangsdruck oberhalb des ermittelten höchsten Lastdruck liegen muss.

Die Berechnung des Soll-Ausgangsdrucks erfolgt über die Steuerung 20 dann im Schritt 116 gemäß Figur 2.

Der im Schritt 116 ermittelte Soll-Ausgangsdruck und der fortwährend im Schritt 100 erfasste Ist-Ausgangsdruck gehen in die Regeleinrichtung der Steuerung 20 zu Ermittlung 118 des Ansteuersignals des Aktors 16 des Pilotventils 14 ein. Es folgt die Ansteuerung des Aktors damit.

Offenbart ist ein Verfahren mit einem Antrieb mit einer Hydromaschine mit verstellbarem Fördervolumen und wenigstens einem darüber in offenem hydraulischen Kreis mit Druckmittel versorgbaren hydrostatischen Arbeitsverbraucher, wobei die Hydromaschine einen hydraulischen Verstellmechanismus hat, der zum Verstellen eines Fördervolumens der Hydromaschine elektrisch proportional ansteuerbar ist, wobei eine elektronische Steuerung vorgesehen ist, über die ein Ausgangsdruck der Hydromaschine in Abhängigkeit eines Lastdrucks des wenigstens einen Arbeitsverbrauchers oder eines höchsten oder priorisierten Lastdrucks der mehreren Arbeitsverbraucher und einer vorbestimmten Druckdifferenz steuer- oder regelbar ist, wobei diese Druckdifferenz zur energieeffizienten Kompensation von Strömungsverlusten von der Hydromaschine zu dem oder den Verbrauchern in Abhängigkeit wenigstens einer die Strömungsverluste bestimmenden Betriebsgröße der Hydromaschine ermittelt wird.

Offenbart sind zudem ein mit dem Verfahren verwendbarer Antrieb und eine Hydromaschine für den Antrieb.

## Patentansprüche

1. Verfahren mit einem Antrieb mit einer Hydromaschine (2) mit verstellbarem Fördervolumen und wenigstens einem darüber in offenem hydraulischen Kreis mit Druckmittel versorgbaren hydrostatischen Arbeitsverbraucher, wobei die Hydromaschine einen Verstellmechanismus (12) hat, der einen Stellzylinder (34) mit einem Stellkolben (36) zum Verstellen eines Fördervolumens der Hydromaschine (2) und ein elektrisch proportional ansteuerbares Pilotventil (14) aufweist, über das ein Druckmittel-Zufluss und/oder ein Druckmittel-Abfluss in einem vom Stellkolben (36) begrenzten Steuerraum (32) des Stellzylinders (34) steuerbar ist, und mit einer elektronischen Steuerung (20), über die ein Ausgangsdruck der Hydromaschine (2) in Abhängigkeit eines Lastdrucks des wenigstens einen Arbeitsverbrauchers oder eines höchsten oder priorisierten Lastdrucks der mehreren Arbeitsverbraucher und einer vorbestimmten Druckdifferenz steuer- oder regelbar ist, mit Schritten:
- "Erfassen 100 des Lastdrucks oder der Lastdrücke",
- "Erhöhen 116 des Lastdrucks oder des höchsten oder priorisierten der Lastdrücke um die vorbestimmte Druckdifferenz auf einen Soll-Ausgangsdruck der Hydromaschine (2)", und
- "Ansteuern 119 des Pilotventils (14) mit einem vom Soll-Ausgangsdruck abhängigen Ansteuersignal",
**gekennzeichnet durch** einen Schritt
- "Ermitteln 114 der vorbestimmten Druckdifferenz zumindest in Abhängigkeit eines Druckmittelvolumenstroms der Hydromaschine (4)".

2. Verfahren nach Anspruch 1 mit einem Schritt
- "Ermitteln 114 der vorbestimmten Druckdifferenz in Abhängigkeit einer Temperatur des Druckmittels, der Hydromaschine 2, des Kreises und/oder des wenigstens einen Verbrauchers".

3. Verfahren nach Anspruch 1 oder 2 mit einem Schritt
- "Ermitteln 112 des Druckmittelvolumenstroms der Hydromaschine (2)".

4. Verfahren nach Anspruch 3, wobei der Schritt
- "Ermitteln 112 des Druckmittelvolumenstroms der Hydromaschine (2)", in Abhängigkeit einer Drehzahl oder Drehwinkelgeschwindigkeit der Hydromaschine (2) und eines Stellweges des Stellkolbens (36) oder Schwenkwinkels der Schrägscheibe oder Schrägachse der Hydromaschine (2) erfolgt.

5. Hydromaschine zur Druckmittelversorgung wenigstens eines hydrostatischen Arbeitsverbrauchers, insbesondere einer mobilen Arbeitsmaschine, in offenem hydraulischen Kreis, mit einem Verstellmechanismus (12), der einen Stellzylinder (34) mit einem Stellkolben (36) zum Verstellen eines Fördervolumens der Hydromaschine (2) und ein elektrisch proportional ansteuerbares Pilotventil (14) aufweist, wobei über dieses ein Druckmittel-Zufluss und/oder ein Druckmittel-Abfluss in einem vom Stellkolben (36) begrenzten Steuerraum (32) des Stellzylinders (34) steuerbar ist, und mit einer elektronischen Steuerung (20), die eingerichtet ist, einen Lastdruck des wenigstes einen Arbeitsverbrauchers oder eines höchsten oder priorisierten Lastdrucks mehrerer Arbeitsverbraucher und eine vorbestimmte Druckdifferenz zu einem Soll-Ausgangsdruck der Hydromaschine (2) zu summieren und in Abhängigkeit des Soll-Ausgangsdrucks ein elektrisches Ansteuersignal für das Pilotventil (14) zu ermitteln und dieses anzusteuern, **dadurch gekennzeichnet, dass** die vorbestimmte Druckdifferenz in der Steuerung (20) zumindest in Abhängigkeit eines Druckmittelvolumenstroms der Hydromaschine (2) eingerichtet ist.

6. Hydromaschine nach Anspruch 5, wobei die vorbestimmte Druckdifferenz in der Steuerung (20) in Abhängigkeit einer Temperatur des Druckmittels, der Hydromaschine (2), des Kreises und/oder des wenigstens einen Arbeitsverbrauchers eingerichtet ist.

7. Hydromaschine nach Anspruch 5 oder 6 mit einer Druckerfassungseinheit (50) zur Erfassung eines Ist-Ausgangsdrucks (53) der Hydromaschine (2), wobei die Steuerung (20) mit einer Regeleinrichtung mit dem Ist-Ausgangsdruck und dem Soll-Ausgangsdruck als Eingangsgrößen eingerichtet ist.

8. Hydromaschine nach einem der Ansprüche 5 bis 7 mit einer Weg-Erfassungseinheit (38) oder Winkel-Erfassungseinheit zur Erfassung eines das Fördervolumen bestimmenden Weges oder Winkels der Hydromaschine (2), insbesondere eines Stellweges des Stellkolbens (36) oder eines Schwenkwinkels einer Schrägscheibe oder Schrägachse der Hydromaschine (2).

9. Hydromaschine nach einem der Ansprüche 5 bis 8 mit einer Drehzahl-Erfassungseinheit oder Drehwinkelgeschwindigkeits-Erfassungseinheit zur Erfassung einer Drehzahl oder Drehwinkelgeschwindigkeit der Hydromaschine (2).

10. Hydromaschine nach Anspruch 8 und 9, wobei die Steuerung (20) eingerichtet ist, den Druckmittelvolumenstrom aus der Drehzahl oder der Drehwinkelgeschwindigkeit und aus dem Weg oder dem Winkel zu ermitteln.

11. Hydromaschine nach einem der Ansprüche 5 bis 9, wobei die vorbestimmte Druckdifferenz in der Steuerung in Abhängigkeit eines Leckagemodells des hydraulischen Kreises eingerichtet ist.

12. Hydrostatischer Antrieb mit einer Hydromaschine (2), die gemäß einem der Ansprüche 5 bis 11 ausgestaltet ist, und mit wenigstens einem damit in offenem hydraulischen Kreis verbundenen hydraulischen Arbeitsverbraucher, insbesondere dem einer linear oder rotatorisch wirksamen Arbeitshydraulik einer mobilen Arbeitsmaschine, wobei ein Lastdruck des wenigstens einen Verbrauchers oder ein höchster oder priorisierter Lastdruck der mehreren Verbraucher erfasst und an die elektronische Steuerung (20) der Hydromaschine (2) zur Ermittlung von deren Soll-Ausgangsdruck gemeldet ist.

13. Antrieb nach Anspruch 12, wobei der wenigstens eine Arbeitsverbraucher oder wenigstens einer der mehreren Arbeitsverbraucher mit der Hydromaschine (2) über eine gemäß einer Arbeitsanforderung betätigbare Zumessblende fluidisch verbunden ist, der eine Individualdruckwaage zugeordnet ist, über die ein Druckverlust über die Zumessblende regelbar ist.

14. Antrieb nach Anspruch 12 oder 13 mit einer Fahrhydraulik mit wenigstens einem hydrostatischen Fahrverbraucher, der im offenen hydraulischen Kreis fluidisch parallel zum wenigstens einen Arbeitsverbraucher mit der Hydromaschine (2) verbunden oder verbindbar ist.
